# EUROPEAN PATENT APPLICATION

(11) **EP 1 187 007 A2**
(43) Date of publication of application: **13.03.2002**
(21) Application number: 01117597.3
(22) Date of filing: 20.07.2001
(51) Int. Cl.: G06F 9/44

(54) **Dialog control method**

(30) Priority: 21.07.2000 JP 2000220460; 31.05.2001 JP 2001164869
(71) Applicant: MATSUSHITA ELECTRIC INDUSTRIAL CO., LTD., Kadoma-shi, Osaka 571-8501 (JP)
(72) Inventor: Inoue, Tsuyoshi, Sagamihara-shi, Kanagawa-ken 229-0031 (JP); Konuma, Tomohiro, Odawara-shi, Kanagawa-ken 250-0214 (JP); Nishizaki, Makoto, Musashino-shi, Tokyo 180-0013 (JP)
(74) Representative: Leson, Thomas Johannes Alois, Dipl.-Ing.

(57) **Abstract**

An information retrieval system using an interactive interface is provided. Various factors, such as a frequency of user's use of the system and user's desires, are reflected in the progress of dialogs performed through the interface between a user and system. The dialogs are performed on a frame-driven technique. A task to be retrieved is provided by a frame in which a plurality of conditions are given as slots. A score determining significance of each slot is given to the slot. The score for each slot can be used in response to a user's manual operation or automatic search made into dialog control, degrees of user's leaning, contents to be retrieved, and others. The order and/or the number of times to make a user fill slots with conditions can be changed dynamically and shortened, thereby dialog control being efficient.

## Description

### BACKGROUND OF THE INVENTION

### (Field of the Invention)

The present invention relates to a method for controlling a dialog and an apparatus of the same used in a system that has a dialog interface for communicating, a plurality of times, conditions for information retrieval through dialogs between a user and the system.

### (Description of the Related Art)

As one example of conventional dialog systems, known is a voice dialog system and dialog control method disclosed by Japanese Patent Laid-open publication NO.5-216618.

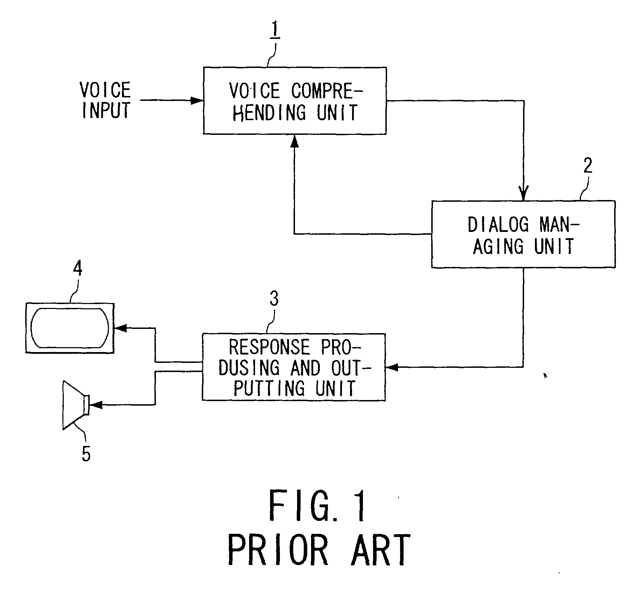

Fig.1 shows the configuration of the conventional voice dialog system disclosed by the above publication. The conventional system shown in Fig. 1 comprises a voice comprehending unit 1, dialog managing unit 2, response producing and outputting unit 3, display 4, and speaker 5. The voice comprehending unit 31 comprehends the meaning and the content of an inputted voice. The response managing unit 2 determines meaning contents of a response based on the comprehended results. The response producing and outputting unit 3 produces a voice response output and an image display output on the basis of the contents of the response. In this dialog control system, in a similar manner to that used in many other voice dialog systems, a sequence of dialogs are determined during the design of the system. In other words, the system is designed on the expectation that a dialog advances with a user who utters words in a predetermined order of utterance and by a predetermined number of times of utterance, which are expected by the system.

In addition, as long as user's utterance of which content is the same, the system is designed to give utterance to one pattern of responses previously determined. Therefore, there is still the fact that that most conventional video dialog systems employ a display controlling technique by which the dialog advances as the system takes the initiative of the dialog.

Unlike the stiff dialog disclosed by the foregoing publication, in which the system takes the initiative, there are known soft dialog control techniques that permit the initiative to go back and forth between users and the system. One such dialog control technique is disclosed by a paper "GUS, A Frame-Driven Dialog System, Daniel G. Bobrow, et at., Artificial Intelligence 8 (1977), 155-173."

The dialog control technique proposed by this paper is realized by a dialog system, wherein a frame concerning a user's dialog purpose is defined. Conditions required to attain the user's dialog purpose, which are called slots, are described in the frame. The conditions are filled as a user performs dialogs with the system. Practically, a sequence to fill the conditions, that is, the progress of dialogs is not described beforehand. Instead, conditions are filled each time in response to user's utterance, during which time the system urges the user to utter so that conditions still short of are filled.

Such dialog control technique makes it possible to realize flexible dialog control, which allows the initiative for dialogs to go back and forth between each user and the system. However, which order should be taken to urge a user to fill a plurality of conditions still empty is defined by the frame, which will lead to dialogs of which flexibility is still unsatisfactory.

Under these circumstances, a flexible dialog control technique with less mental burdens on users is strongly desired as dialog control techniques applied to interactive interface to control devices.

### SUMMARY OF THE INVENTION

An object of the present invention is to provide a dialog control method that is able to make dialogs efficient by using a dialog history and/or user's personal information given in a system.

A further object of the present invention is to provide a dialog control method that is able to change the content of an inquiry to a user through dialogs into an optimum order and/or an optimum number of times, in order to efficiently retrieve information from databases in which stored data are dynamically changed in the type and the number of data, not constant, as seen in web information on a network.

To realize the above objects, as one example of the present invention, there is provided a dialog control method comprising the steps of: changing an inquiry to a user according to significance of the inquiry; and outputting the changed inquiry toward the user.

It is preferred that the method further comprises the step of receiving either one of a content transmitted from a user and a response to the inquire toward the user, wherein the changed inquiry is outputted in the outputting step in reply to the either one of the content and the response.

Accordingly, the inquiries to the user can be controlled to an appropriate order and/or to the number of times.

For example, the changing step changes the inquiry in an order of a plurality of questions belonging to the inquiry. Alternatively, the changing step may change the inquiry in a content of the inquiry. By way of example, the changing step changes the inquiry by mutually combining at least two of a plurality of questions.

Still preferably, the significance of the inquiry is decided depending on any one selected from history of a dialog communicated between the user and a system, user's personal information, and information inputted by the user.

Stilly, at least one of the content and the response received in the receiving step is inputted by the user through voice recognition, an operation with a touch panel, and an operation with a keyboard.

The foregoing concepts of the changing and outputting steps can also be applied to an information receiving method, a dialog control system, a car navigation system, and a computer-readable program.

### BRIEF EXPLANATION OF THE DRAWINGS

In the accompanying drawings:
Fig.1 shows the configuration of a conventional dialog control system;
Fig.2 is a block diagram showing the configuration of a dialog control system, functionally combined into an information retrieval system, employed in a first embodiment of the present invention;
Fig.3 is a block diagram functionally showing the configuration of the dialog control system employed in the first embodiment;
Fig.4 illustrates a frame for retrieving gym shoes;
Fig.5 is a block diagram showing the configuration of a dialog control system, functionally combined into an information retrieval system, employed in a second embodiment of the present invention;
Fig.6 is a block diagram functionally showing the configuration of the dialog control system employed in the second embodiment;
Fig.7 is a flowchart showing processing carried out by a dialog control system (control unit) to which the present invention is applied;
Fig.8 illustrates a frame for retrieving an accommodation:
Fig.9 exemplifies a screen visualized during the accommodation retrieving task;
Fig.10 exemplifies pieces of information stored in a frame control memory section;
Fig.11 exemplifies pieces of information stored in the frame control section;
Fig.12 exemplifies another screen visualized when information is inputted into the accommodation retrieving task;
Fig.13 exemplifies pieces of information newly stored in the frame control memory section; and
Fig.14 exemplifies another screen visualized when information is inputted into the accommodation retrieving task.

### DESCRIPTION OF THE PREFERRED EMBODIMENTS

Referring to the accompanying drawings, various embodiments of the present invention will now be described.

### (First embodiment)

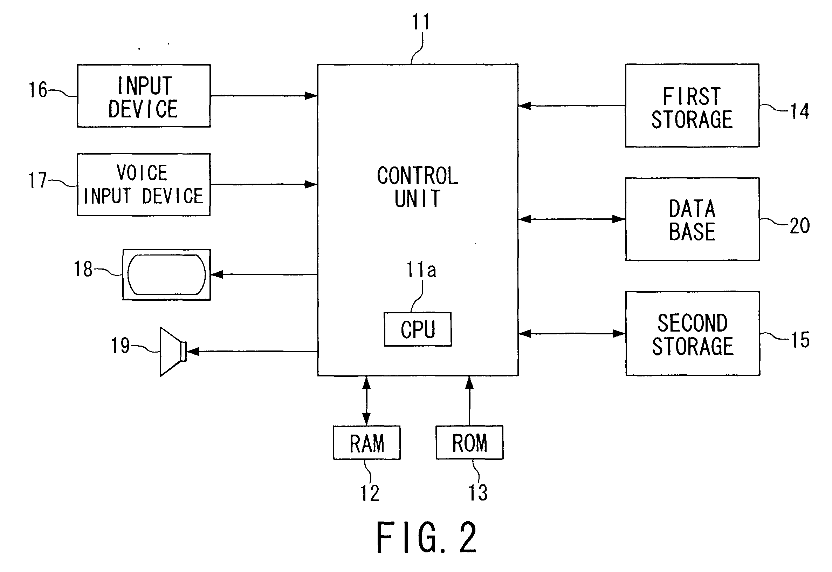

With reference to Figs.2 to 4, a first embodiment of the present invention will now be described.

Fig. 1 shows, from a hardware viewpoint, the configuration of an information retrieval system according to the first embodiment, to which the dialog control system of the present invention is applied. The information retrieval system is provided with a control unit 11 in which a central processing unit (CPU) 11a is incorporated and which is responsible for processing of data necessary for dialog control on the basis of a previously given program. The control unit 11 is also provided a random access memory (RAM) 13, a read-only memory (ROM) 12, a first storage 14, a second storage 15, an input device 16, a voice input device 17, a display 18, speakers 19, and a database 20. The program on which the CPU 11a operates is installed in the ROM 13 in advance, and can be read by the control unit 11 when being activated.

Of these units, the RAM 12 is used by the control unit 11 and temporarily stores necessary data therein. The first storage 14 is used to memorize information about slot scores (functioning as weighting factors), slot default values, dialog history, and individuals (users). The second storage 15 is used to memorize data of an acoustic model and a linguistic model.

The input device 16, which is used to input into the system data other than voice, includes a keyboard, touch pen, or others. The voice input device 17 is used to input into the system voice to be transmitted from a user to the system. The display is in charge of displaying image information that has been received from the control unit 11. The speakers 12 replay voice data that have been given from the control unit 11.

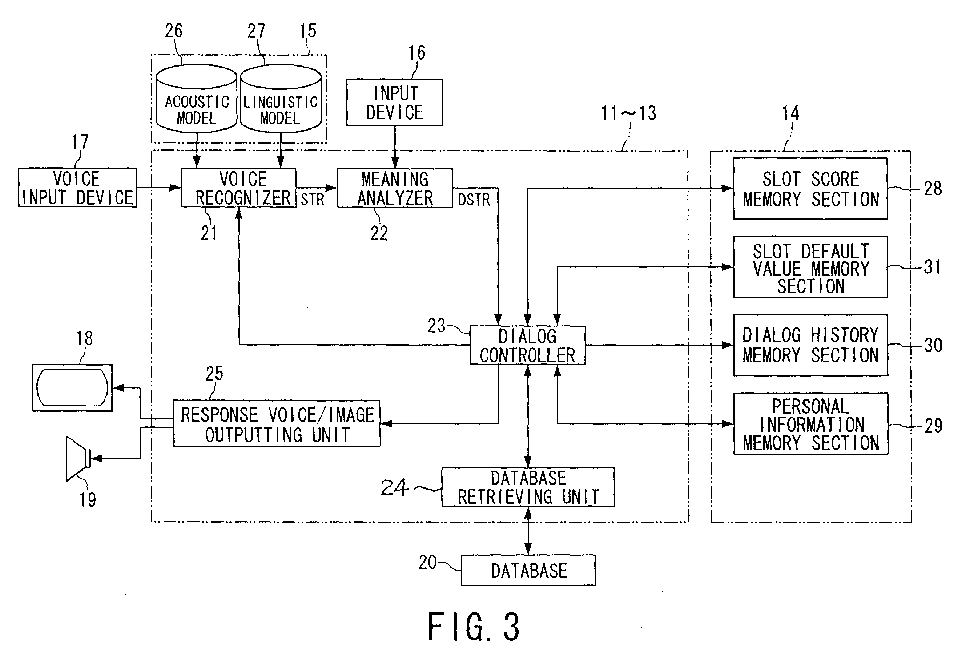

Because the CPU 11a operates in compliance with a predetermined program, the control unit 11 is able to function as various types of units needed to accomplish data retrieval and dialog control. As shown in Fig.3, such units are composed of a voice recognizer 21, meaning analyzer 22, dialog controller 23, database retrieving unit 24, and response voice/image outputting unit 25.

The voice recognizer 21 recognizes an inputted voice and converts it to a string of text characters using an acoustic model 26 and a linguistic mode 27. The meaning analyzer 22 converts the string of text characters given by the voice recognizer 21 to an expression of meaning. The dialog controller 23 is responsible for determining a content of a response to be returned to a user on the basis of various pieces of information provided. Such information consists of the expression of meaning, user's personal information, information about history of dialogs, and a result of database retrieval. The expression of meaning, which is analyzed by the meaning analyzer 22, corresponds to a user's input.

The database retrieving unit 24 retrieves information from the database 20 in response to conditions given by the dialog controller 23. The response voice/image outputting unit 25 produces a response output of voice as well as an output of image display.

The first storage 14 includes a slot score memory section 28, personal information memory section 29, dialog history memory section 30, and slot default value memory section 31.

The slot score memory section 28 memorizes scores of slots used by the dialog controller 23 to decide how to make inquiries. The personal information memory section 29 memorizes information about individual users. The personal information memory section 29 memorizes information about history of past dialogs. Moreover, the slot default value memory section 31 memorizes default values for slots of a frame adopted to accomplish a desired task.

The database 32 memorizes a database toward which information retrieval is performed.

In the information retrieval system, the dialog controller 23 uses a frame-driven dialog control technique. That is, a frame for a task to be accomplished is provided. Like a frame used as an expressing technique of knowledge in the field of artificial intelligence, one or more slots necessary for accomplishing a task to be targeted is provided in the frame. In response to a use's input, information obtained from the user's input is then filled into the slot. There are two types of operation in operating the frame. One is an operation based on batch processing, in which a system requests a user to utter a word to fill in the slots. When all the slots are filled, the system conducts a task specified by the frame. The other operation is based on sequential processing, in which every time that a system stores a user's input into a slot, the system uses the input information to conduct a task.

An operation of the information retrieval system will now be described. In the present embodiment, the system operates on the foregoing sequential processing manner.

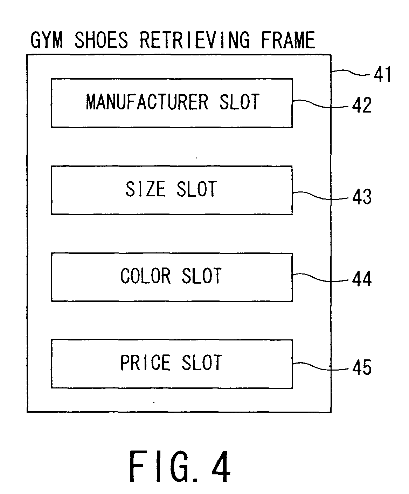

As one example of the operation, as shown in Fig.4, a task is set to retrieval of gym shoes and a frame is also set to accomplish the task. Therefore, in the following procedures, a frame (gym shoes retrieving frame) 41 is used to retrieve gym shoes, through dialogs, that is desired by a user. Retrieval conditions (slots) in the gym shoes retrieving frame 41 are "manufacturer" 42, "size" 43, "color" 44, and "price" 45. Thus, the slots in the gym shoes retrieving frame 41 are formed correspondingly to those conditions.

A voice inputted into the voice input device 17 is converted therein to an electric signal having acoustic parameters corresponding to the inputted voice. In the voice recognizer 21, the acoustic parameters are subject to an analysis of voice recognition using the acoustic model 26 and linguistic model 27. A result of the voice recognition is produced as a string of text characters STR and then outputted from the recognizer 21 to the meaning analyzer 22. In the analyzer 22, the string of characters STR are divided into one or more pieces of information DSTR and then outputted to the dialog controller 23.

In the dialog controller 23, the one or more pieces of information DSTR are filled in appropriate slots in the frame 41 after considering the history of dialogs. For example, when a user utters gave utterance to a sentence of "I would like to have shoes manufactures by ○○.", the "manufacturer ○○" is filled into the manufacturer slot 42 of the frame 41. Whenever a value is filled into any slot, the dialog controller 23 operates responsively so as to send the condition expressed by the value to the database retrieving unit 24.

The database retrieving unit 24 retrieves data stored in the database 20 in compliance with the condition, and then sends a resultant retrieved result to the dialog controller 24.

Then, if the number of retrieved results is over a certain limit, the dialog controller 23 inquires of the user the next retrieval condition to narrow the retrieved results. To conduct this inquiry, the dialog controller 23 searches an empty slot in the frame 41, selects a given inquiry sentence corresponding to the empty slot, and sends the inquiry sentence to the response voice/image outputting unit 25. Accordingly, this series of processing makes the information retrieval system to urge user's utterance to fill in the empty slot. Responsively to the sending of the sentence, the response voice/image outputting unit 25 responses to the user by providing the retrieved result to the user through the speakers 19 or the screen of the monitor 18.

By way of example, in response to an user's utterance of "I would like to have shoes manufactured by ○○.", a "manufacturer ○○" is filled into the manufacturer slot 42 in the frame 41. Then, retrieval is conducted in response to the filling, before the number of retrieved results is counted. If the number is larger than a certain number, the next inquiry is performed toward the user by the system. Specifically, inquiries provided by the remaining slots, such as "What size do you want?," "What color do you want?," and/or "What price range do you want?," are done in sequence as system's responses until the number of retrieved results falls below the limit.

In dialogs between the system and a user, the user may give utterance to "I want ΔΔ-color shoes manufactured by ○○." In this case, "a manufacturer ○○" and "a ΔΔ color" are filled in the maker slot 43 and color slot 44 in the gym shoes retrieving frame 41, respectively. If the number of retrieved results is still over a predetermined limit, an inquiry of "What price range do you want?" will be made from the system to the user.

The order of system's inquires described above is automatically determined with scores assigned to the slots, which are memorized by the slot score memory section 28. The inquiries will be conducted in an order of largeness of the scores (i.e., the highest score is given the top priority for inquiry). In the initial state of the system, each slot is given a predetermined initial value. The score for each slot is one parameter changeable from outside the system, which can be decided based on factors, such as user's desires, user's personal information, and/or user's learned degrees of operations toward the system.

Moreover, a plurality of scores can be specified, under which a plurality of modes each assigned to each score and can be switched over thereamong, with the result that it is therefore possible to change the orders to inquire. If a plurality of slots have the same score, the dialog controller 23 inquires to simultaneously fill all the slots of which scores are the same.

In cases the slot scores stored in the slot score memory section 28 are initial values, the system always conducts an inquiry of "Which manufacture do you like best?" at first in the dialogs of the gym shoes retrieving task. If the color slot 44 is empty, the next reply from the system is "What color do you like best?." However, for a user who always start his or her inquires from the "color," using the input device 16 or the voice input device 17 enables the score of the color slot 44 to be changed, so that the first inquiry from the system to the user is always "What color do you like best?."

Users' desires can be decided by using the personal information memory section 29. For example, when user's personal information, such as a user's favorite manufacture and/or a user's favorite color are registered in the personal information memory section 29, they can be used for deciding an order of inquiries. Incidentally, the personal information memory section 29 is not limited to a memory incorporated in the system, but portable memory mediums such as memory cards can be incorporated into the system and can be used.

Alternatively, if a user desires that the retrieval conditions of the "manufacturer" and "size" be used simultaneously, the slot scores of the manufacturer slot 42 and the size slot 43 are made to be the same. Thus, those slot scores make the system output an inquiry of "Please input your favorite manufacturer and size."

As described above, a user is able to change the values of slot scores through a manual operation, so that the order of inquiries and/or the number of times of inquiries, which are performed by the system, can be changed. Alternatively, information stored in the dialog history memory section 30 can be used to change the order of inquiries and/or the number of times of inquiries. For example, in conducing the foregoing gym shoes retrieving task, it is supposed that the dialog controller 23 detects from the dialog history memory section 30 the fact that a user always utters information about colors at first. In this case, the dialog controller 23 changes the score of the color slot 44 in the slot score memory section 28, resulting in that the inquiry order responded by the system is changed into a new order in which information about colors are first inquired. Alternatively, where a user always inputs a plurality of inquires at a time or a user utilizes the task more frequently, the dialog controller 23 assigns the same value to the scores of a plurality of slots in the memory section 28. Accordingly, a response sentence including a plurality of inquiries is made in the system.

Still alternatively, the scores of the slots can be given to the slot default value memory section 31 as default values. Therefore, as for a slot into which the same content is always inputted or to which data read from the personal information are assigned, a default value can be given to the slot default value memory section 31 through the input device 16 or voice input device 17. When the default value is specified toward a certain slot as above, the system will no longer inquire about the certain slot from the next dialog.

For instance, in the foregoing example of the gym shoes retrieval task, a user can set the size of her or his own feet into the size slot 43 as a default value, because the size of user's feet will not change so drastically. This setting eliminates the inquiry of "What is the size of your feet?," which is done by the system when a pair of gym shoes is retrieved. Thus it is possible for a user to lessen an amount of operations that the user utters about her or his shoe size.

Still, the default value can alternatively be set, like the setting of the order of inquires described above. That is, in cases the dialog controller 23 determines that a user has always set a constant value into a certain slot with the help of information read from the dialog history memory section 30, the dialog controller 23 gives the constant value to the slot default value memory section 31 as a default. It is therefore not required for the user to specify the default value, but it is enough that the user utilizes the system several times. The procedures for retrieval is automatically customized to the user, with the number of turns of dialogs decreased.

The responses from the system can be modified by the dialog controller 23 in accordance with contents of a database stored in the database 20. For example, in performing the foregoing gym shoes retrieval task, it is supposed that there is only one manufacturer in the table of manufacturers of the database. In this case, the dialog controller 23 gives the information about the one manufacturer to the manufacture slot 42, so that an inquiry about manufactures to a user will not carried out.

In the above embodiment, the database retrieving unit 24 is realized by a search engine incorporated in the information retrieval system. Instead, a search engine on the Internet may be used as the database retrieving unit 24. Also, the database 20 is not limited to a database incorporated in the system. For instance, the database 20 may be substituted by a database on the Internet or a database stored in a portable recording medium, such as memory cards and DVDs.

Still, the foregoing embodiment has been described about the gym shoes retrieval task, but other tasks are also available with the present invention. Such tasks include retrieval of facilities through a car navigation system or an information terminal, information retrieval in transportation, and program retrieval on the TV, and retrieval of music or artists through music delivery service.

### (Second embodiment)

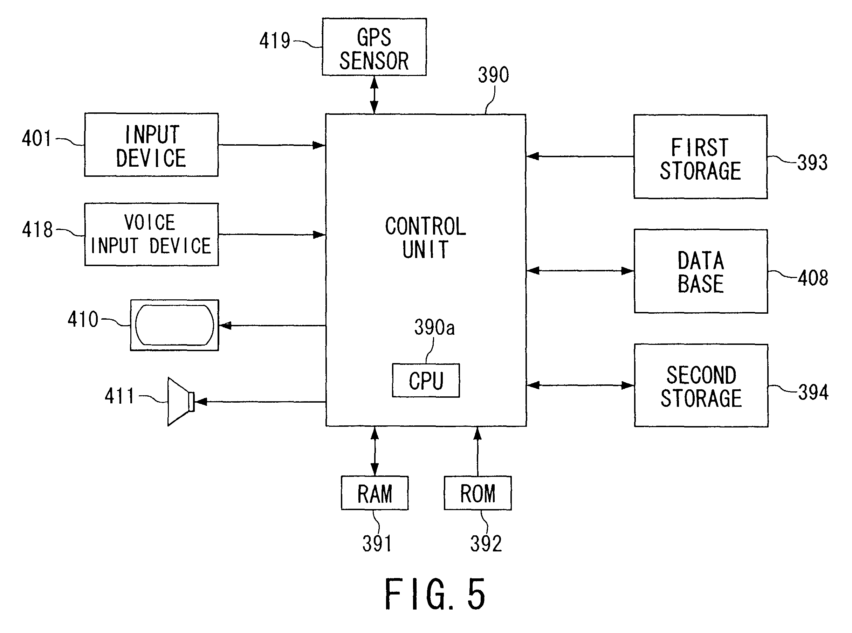

With reference to Figs.5 to 14, a second embodiment of the present invention will now be described. An information retrieval system of the second embodiment is realized as a car navigation system.

Fig.5 shows, from a hardware viewpoint, the configuration of the car navigation system according to the second embodiment, to which the dialog control system of the present invention is applied.

The car navigation system is provided with, like the first embodiment, a control unit 390 in which a central processing unit (CPU) 390a is incorporated and which is responsible for processing of data necessary for dialog control on the basis of a previously given program. The control unit 390 is also provided a random access memory (RAM) 391, read-only memory (ROM) 392, first storage 393, second storage 394, input device 401, on-vehicle database 408, display 410, speakers 411, voice input device 418, and GPS (Global Positioning System) sensor 419. The program on which the CPU 390a operates is installed in the ROM 392 in advance, and can be read by the control unit 390 when being activated.

Of these units, the RAM 391, input device 401, display 410, speakers 411, and voice input device 418 are constructed in the similar manner to those in the first embodiment.

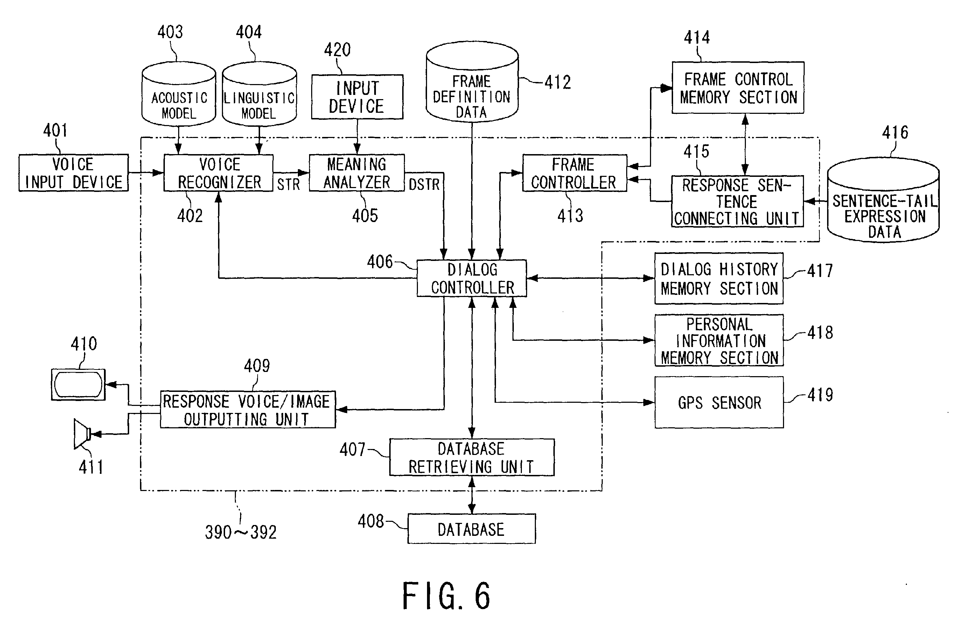

As shown in Fig.6, the first storage 393 is used to memorize, in each memory, section, information about an acoustic model 403, linguistic model 404, frame definition data 412, and sentence-tail expression data 416, which will be described later. The second storage 394 is used to memorize, in each memory section, information about dialog history (memory section 417) , user's personal matters (memory section 418), and frame control (memory section 414).

Because the CPU 390a operates in compliance with a predetermined program, the control unit 390 is able to function as various types of units needed to accomplish data retrieval and dialog control. As shown in Fig.6, such units are composed of a voice recognizer 402, meaning analyzer 405, dialog controller 406, database retrieving unit 407, response voice/image outputting unit 409, frame controller 413, and response sentence connecting unit 415.

The voice recognizer 402 recognizes an inputted voice and converts it to a string of text characters using the acoustic model 403 and linguistic mode 404. The meaning analyzer 405 converts the string of text characters given by the voice recognizer 402 to an expression of meaning.

The dialog controller 406 controls dialogs on the basis of various pieces of information. Such information is consists of an expression of meaning supplied from the meaning analyzer 405, which corresponds to user's input, a slot value requesting sentence supplied from the frame controller 413, pieces of user's personal information supplied from the personal information memory section 418, information about dialog history supplied from the dialog history memory section 417, and a retrieved result supplied through the database retrieving unit 407.

The database retrieving unit 407 retrieves information from the database 408 in response to conditions given by the dialog controller 406. The response voice/image outputting unit 409 can produce a response output of voice as well as an output of image display. The monitor 410 and speakers 411 operate in the similar way to the first embodiment.

The database 408 is a memory medium that stores therein information provided by the car navigation system.

The frame definition data, which are stored the first storage 393, are data by which a frame used for the dialog control is defined. The sentence-tail expression data, which are also stored the first storage 393, express a sentence tail to produce a sentence by connecting phrases.

A frame control memory section 414, which is stored in the second storage 394, memorizes data of frames given from the frame controller 413. Both dialog history memory section 417 and personal information memory section 418 are configured in the same way as to the first embodiment.

Moreover, the frame controller 413, which is realized functionally by the control unit 390, operates together with the frame controller 406 and the response sentence connecting unit 415. Practically, the frame controller 413 produces frame information to be stored in the frame control memory section 414 in replay to a request from the dialog controller 406. Further, the controller 413 produces a response sentence when the response sentence connecting unit 415 requests a slot value to be filled in the frame and a value to be filled in each slot.

The response sentence connecting unit 415 connects slot values requesting phrases receiving from the frame control memory section 414 by using sentence-tail expression data 416, so that a response sentence is produced.

The GPS sensor 419 detects a current position of the automobile into which the car navigation system is mounded.

An operation of the car navigation system will now be described.

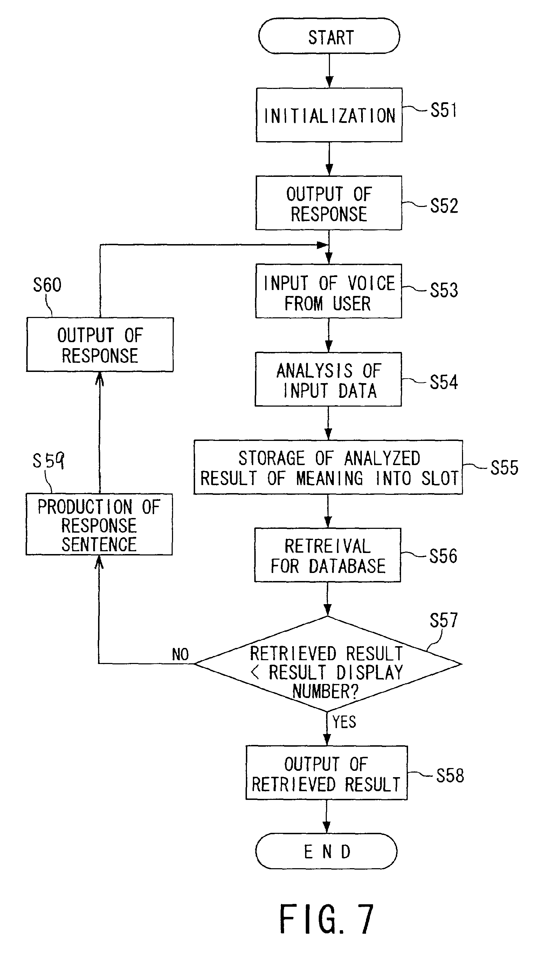

The present car navigation system can be available for retrieval of, for example, a movie theater, information about locations of traffic congestion, and a train schedule through the Internet or FM multiplex broadcasting. Additionally, the system is available for setting a desired destination such as retrieval of accommodations, drinking and eating places, and parking lots. In the following, the car navigation system will be exemplified in a mode in which a desired accommodation is retrieved. Fig.7 shows a flowchart for the retrieval.

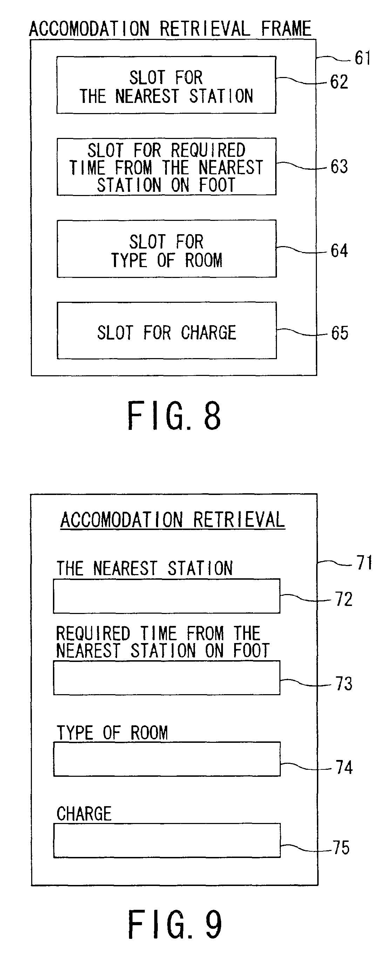

In the present embodiment of the car navigation system, the monitor 410 displays an accommodation retrieval task 71, as shown in Fig.9. In this task, necessary information will be inputted with a user's voice.

In the accommodation retrieval task 71, as shown in Fig.8, there are provided retrieval conditions, such as "the nearest station" 72, "required time from the nearest station on foot" 73, "type of room (single, double, twin, or suit)" 74, and "charge" 75. In order to realize the task through voice dialogs, the dialog control is carried out using an accommodation retrieval frame 61 shown in Fig.8. The frame 61 has slots assigned to necessary retrieval conditions and dialogs are made to advance in a controlled manner so that the slots are filled with values in an appropriate order dynamically changed. In this accommodation retrieval frame 61, defined are a slot 62 for "the nearest station," a slot 63 for the "required time from the nearest station on foot," a slot 64 for the "type of room," and a slot 65 for the "charge."

At first, initial processing is done (Step S51). Namely, when it is requested by the dialog controller 406 that the frame controller 413 conduct its initial processing, the frame controller 413 will perform its initial processing a task is decide. The frame controller 413 reads frame setting file from the frame definition data 412 correspondingly to the decide task, and form a necessary memory area in the frame control memory section 414, before storing an initial value into the section 414. The memory area is required for operations in the frame.

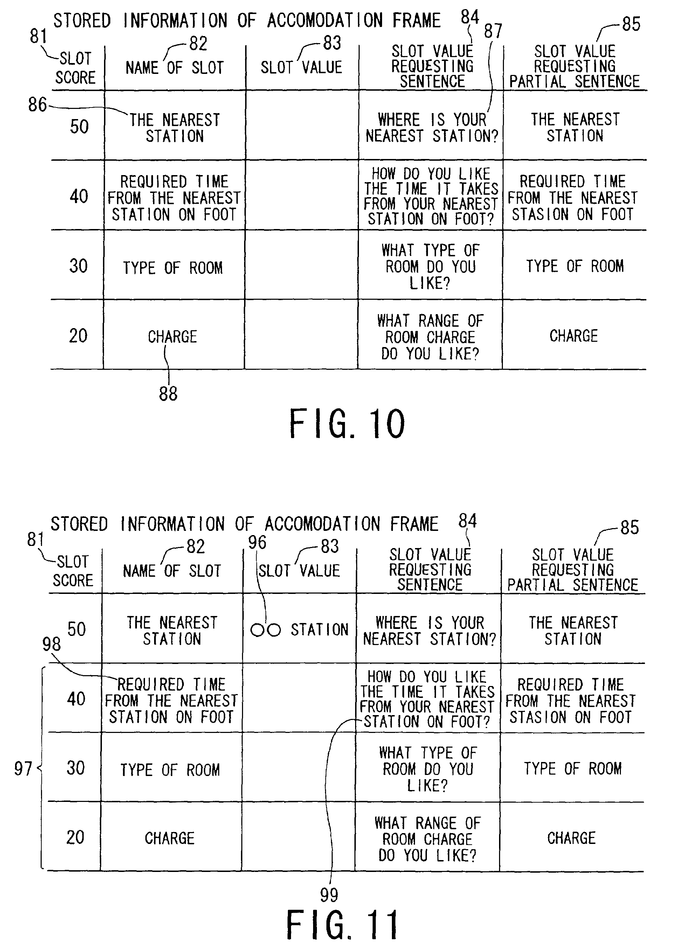

In the memory area, as shown in Fig.10, for example, information in relation to the frame 61 is stored. As shown in Fig.10, there are provided, as accommodation frame memorizing information, items of a slot score 81, slot name 82, slot value 83, slot value requesting sentence 84, and slot value requesting phrase (partial sentence) 85. Of these, the slot score is a parameter to express the significance of the slots. The slot name 82 is the name of each slot. The slot value 83 expresses data stored in each slot. Further, the slot value requesting sentence 84 is a response sentence used for obtaining a value for corresponding one slot, while the slot value requesting phrase 85 is a sentence used in requesting a user to fill in a plurality of slots simultaneously.

The frame controller 413 stores default values of response sentences into the frame control memory section 414 from the frame definition data 412. Such default response sentences are outputted at the time when dialogs are started, information has been retrieved, the dialogs are completed, or some other actions are made.

When each slot value 83 is filled by its default value, a dialog will not be performed, because it is not necessary to fill the slot value any more. This permits a user to input information in a faster manner. For example, in this example of the accommodation retrieval task, the name of the nearest station most convenient for a user can be filled in the nearest station slot as a default value. Thus, for retrieving an accommodation, it is not required to perform an inquiry of "Where is your nearest station?" from the system. This eliminates the necessity of inputting the nearest station most convenient for a user whenever the accommodation retrieval is made, avoiding cumbersome operations involved in such inputs.

The default values may be set by a user, in person, by operations through the voice input device 401 or the input device 420, or may be acquired from the personal information memory section 418. Alternatively, where it is determined from information in the dialog history memory section 417 that a certain user always inputs the same name of the nearest station, the name of such nearest station may be specified as a default value for the nearest station. The personal information memory section 418 is not limited to a memory previously incorporated in the system, but uses a portable memory medium, such as a memory card, which is detachably incorporated in the system.

In the same task, a frame setting file is able to have different frame definitions on each of which the foregoing frame is changed in information. By this configuration, even for the same task, dialogs can be controlled into different initial values or different response sentences.

The initialization processing at Step S51 is followed by a request submitted by the dialog controller 406 toward the frame control memory section 414 for obtaining a response sentence to start dialogs for retrieving information. Responsively to this request, the frame controller 413 receives a dialog start response sentence from the frame control memory section 414 and then sends it to the dialog controller 406. Therefore, the dialog controller 406 outputs the dialog start response sentence to the response voice/image outputting unit 409 via the speakers 411 (Step S52). In cases any dialog start response sentence is not defined in the initialization, a slot value requesting sentence 84 that agrees with a certain slot of which score is the highest is outputted as the dialog start response sentence. For instance, in the case of Fig.10, a response sentence of "Where is your nearest station?" is outputted.

In response to the outputted response sentence, a user utters words of for example "Search a hotel nearest to the ○○ station." Voices inputted into the voice inputting unit 401 are converted into electric signals, and further converted into acoustic parameters. In the voice recognizer 402, the acoustic parameters from the voice input device 401 are subjected to voice recognition with both of the acoustic model 403 and the linguistic model 404. A result of the voice recognition is outputted from the voice recognizer 402 in a string of text characters STR (Step S53).

The meaning analyzer 405 divides the string of text characters STR into one or more pieces of information DSTR and outputs them, each of the pieces of information being directed to storage into each slot (Step S54). By way of example, in the case that the string of text characters STR is "Search a hotel nearest to the ○○ station," "the ○○ station" is outputted as the DSTR in accordance with the slot 62 for the nearest station.

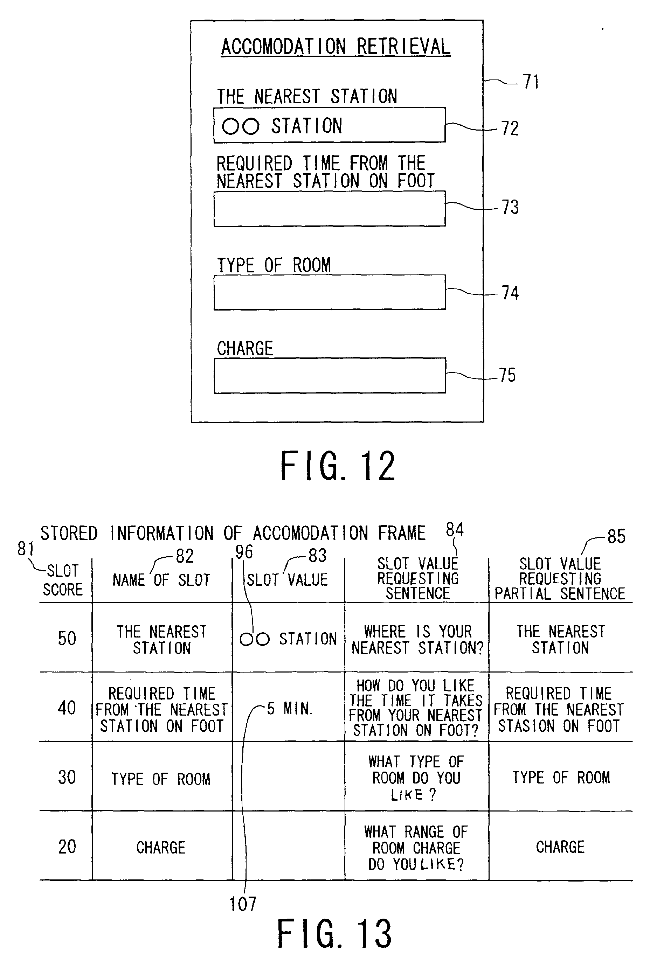

The dialog controller 406 sends one or more pieces of information DSTR provided by the meaning analyzer 405 to the frame controller 413, in which the pieces of information are stored into the corresponding slots formed in the frame control memory section 414. By way of example, the DSTR of "the ○○ station" is filled into the slot 62 for the nearest station of the accommodation retrieval frame 61. The dialog controller 406 gives the result to the monitor 410 with the help of the response voice/image display outputting unit 409 (Step S55). In this stage, as shown in Fig.11, information stored in the accommodation retrieval frame 61 is formed in the frame control memory section 414. Therefore, "the ○○ station" 96 is filled into the slot value 83, while as shown in Fig.12, "the ○○ station" is displayed at a window 72 of the slot 62 for the nearest station on the monitor 410.

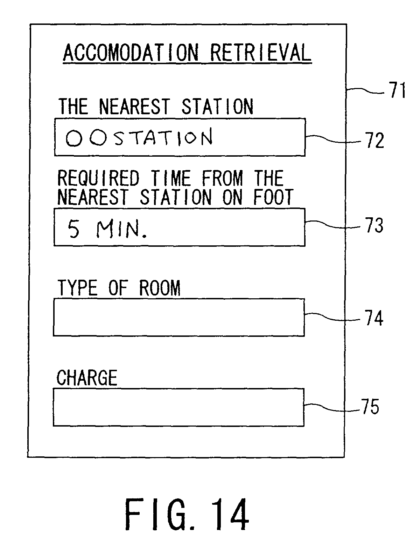

Where the string of text characters STR is "a hotel located about 5 minutes from the ○○ station," the DSTR is "the ○○ station" and "5 minutes," so that the slot 62 for the nearest station and the slot 63 for the required time from the nearest station on foot in the accommodation retrieval frame 61 are filled in the ○○ station" and "5 minutes," respectively. In this stage, as shown in Fig.13, information stored in the accommodation retrieval frame 61 is formed in the frame control memory section 414. Therefore, "the ○○ station" 96 and the "5 minutes" 107 are filled into the slot values 83, while as shown in Fig.14, "the ○○ station" and the "5 minutes" are displayed at windows of the slots 62 and 63 for "the nearest station" and for "the required time from the nearest station on foot" on the monitor 40, respectively.

As a modification, storing values into the slots may be done using history of dialogs memorized in the dialog history memory section 418. For example, the dialog history memory section 418 can be configured such that it preserves the number of turns of dialogs. The number is used to determine if or not a desired number of turns has been measured after storing a slot value of "○○." When a slot value of "ΔΔ" has been filled into the same slot after the measurement of the desired number, the dialog controller 406 is able to confirm by outputting a message of "Will you change ○○ to ΔΔ?".

Moreover, as to an utterance of "Search a hotel near to the station.", information indicative of a current position of the car is taken from the GPS sensor 419. The current position is applied to search through the database retrieving unit 407, with the nearest station searched. After the search, the searched name of a station nearest to the current car position is stored into the slot for the nearest slot.

When any value has been stored into a certain slot of the frame control memory section 414, the dialog controller 406 will attempt to acquire, through the frame controller 413, the information indicated by the stored value. The dialog controller 406 then sends a condition indicated by the information to the database retrieving unit 407. The database retrieving unit 407 retrieves the data of the database 408 to extract one or more results in compliance with the condition. As a result of this retrieval, for example, data expressing hotels located around the "○○" station are sent to the dialog controller 406 (Step S56).

The database retrieving unit 407 is not confined to the search engine placed within the system, but may use a search engine on the Internet. Also, the database 408 is not restricted to use of a database incorporated within the system, and for instance, the database 408 may be substituted by a database on the Internet or a database stored in a portable recording medium, such as memory cards and DVDs.

On receiving the retrieved result from the database retrieving unit 407, the dialog controller 406 examines if or not the number of retrieved results is less than a threshold TH that represents the number of results to be displayed (Step S57).

If the number of retrieved results is below the threshold TH, the retrieved results are outputted through the response voice/image outputting unit 409, before the dialog for retrieval is ended (Step S58). For instance, in cases retrieved hotels located around the "○○" station are five in number and the foregoing threshold TH is ten in number, the names of five hotels selected from the ten retrieved hotels are displayed on the screen. The system then urges a user to select his or her most desired one from the displayed hotels by using the voice input device 401 or the input device 420, before terminating the dialog.

In contrast, if the retrieved results are equal or larger in number to or than the threshold TH, the retrieved results are further narrowed by some means. Practically, the dialog controller 406 requests the frame controller 413 to search empty slots in the frame control memory section 414, which have not been filled by values yet. From the searched empty slots, a lot of the highest score is found by the frame controller 413. In order to urge the user to fill a condition into the found empty slot, the frame controller 413 then selects a slot value requesting sentence that corresponds to the found empty slot, and then sends a selected sentence to the dialog controller 406 (Step S59). If a plurality of slots are the same in score in selecting the slot value requesting sentence, the dialog controller 406 makes the sentence so as to fill values in all the slots of the same score at a time.

For example, in the case shown in Fig.11, the slot for the "○○" station 96 has already been filled and there is left three empty slots expressed by a reference 97. Of the empty slots, the name of the slot with the highest score 81 is the slot for the "required time from the nearest station on foot" 98. Therefore, the slot value requesting sentence 84 directed to this slot is a message 99 that is expressed by "How do you like the time it takes from your nearest station on foot?".

Each slot score is a changeable parameter from outside the system and can be decided depending on user's desires, user's private information, and/or user's degrees of learning to the system.

For example, although the highest default score in the foregoing example is given to the slot for "the nearest station," this can be changed. If a user wants to be asked at first from the charge any time in retrieving this task, the user is allowed to operate the voice input device 401 or the input device 420 so that the score for the "charge" slot 65 becomes the highest. This is formed into frame definition data and preserved in the memory of the frame definition data 412. This makes it possible that the value 83 of the "charge" slot 65 is first requested from the next dialog.

When it is desired that both of "the nearest station" and "the required time from the nearest station on foot" are retrieved at a time, a user makes use of the voice input device 401 or the input device 420 to change the score of the slot 63 for "the required time from the nearest station on foot." In other words, the score of the slot 63 is made to be equal to that of the slot 62 for "the nearest station" and to be a maximum, together with that of the slot 62, in the slot score memory section 412. This change allows the system to utter the first inquiry such that "Tell us your nearest station and the required time from your nearest station on foot." Such response sentence to fill a plurality of empty slots simultaneously is produced by the response sentence connecting unit 415. This unit 415 connects specified slot value requesting phrases 85 stored in the frame control memory section 414 with the sentence-tail expression data 416.

Still, dialog history stored in the dialog history memory section 418 can be used for controlling the slot scores. If the dialog history shows that, to the system's first inquiry of "Where is your nearest station?", a user always replies by inputting "Within ¥5000," the dialog controller 406 commands the frame controller 413 to change the score of the slot 65 for the "charge" up to a highest value in the frame definition data 412.

Another example is that the dialog history shows that, to the system's first inquiry of "Where is your nearest station?", a user always responds with the input of "Within 5 minutes from my nearest station on foot." In this case, the dialog controller 406 commands the frame controller 413 to give the same score to the slots 62 and 63 for "the nearest station" and the "required time from the nearest station" in the frame definition data. As a result, an inquiry of, for example, "Tell us your nearest station and the required time from your nearest station on foot." can be done at a time.

Still, when the dialog history reveals that a user uses this system very often, i.e., the number of times of user's access to this system is larger, it can be regarded that the user is highly trained for the operations of this system. In such a case, the dialog controller 406 gives the same value to a plurality of slots in the frame control memory section 414, thereby providing a response sentence to inquire a plurality of conditions, like the above.

On the other hand, in the dialogs between a user and the system, depending on contents of the database 408, the procedures for retrieval can be changed by the dialog controller 406. For example, in the foregoing accommodation retrieving task, when only data of "5 minutes" for the "required time from the nearest station on foot" is stored in the database, the dialog controller 406 makes the value "5 minutes" to be filled in the slot 63. In consequence, an inquiry to a user is no longer carried out as to the required time from the nearest station on foot.

The response sentence is decided as the above various modes, the dialog controller 406 sends the specified slot value requesting sentence to the response voice/image outputting unit 409 as an inquiry sentence (Step S59).

The response voice/image outputting unit 409 receives the sentence from the dialog controller 406 and provides it to the speakers 411 or monitor 410 (Step S60). Interactive operations between the user and the system are repeated several times, like shown at Steps S53 to S57 in Fig.7. During the repetition, the number of retrieved results received through the database retrieving unit 407 is repeatedly examined if the number falls into the threshold TH that corresponds to the number of results to be displayed. When the number falls into the threshold TH, the retrieved results are outputted through the response voice/image outputting unit 409, as described above, before the dialogs for retrieval is terminated.

As described, even when the same frame for a certain retrieval task is selected, the order to make a user to fill slots with conditions and/or the number of times of responses to make a user fill slots with conditions are dynamically controlled depending on various factors. Such factors include user's desires, personal information, user's tendency to use the system determined from dialog history in the system, and contents of the database used for data retrieval. The dynamic control of the order and/or the number of times shorten the time required for providing the system with conditions and makes it possible for users to use the system pleasantly. In addition, information can be retrieved efficiently from database that is changeable, so that retrieved results are derived faster than the conventional system. Degrees of freedom for the dialogs are therefore increased largely.

The present invention is not limited to the information retrieval system mentioned above, and can be carried out in further various modes within the gist of the present invention indicated by the appended claims.

An information retrieval system using an interactive interface is provided. Various factors, such as a frequency of user's use of the system and user's desires, are reflected in the progress of dialogs performed through the interface between a user and system. The dialogs are performed on a frame-driven technique. A task to be retrieved is provided by a frame in which a plurality of conditions are given as slots. A score determining significance of each slot is given to the slot. The score for each slot can be used in response to a user's manual operation or automatic search made into dialog control, degrees of user's leaning, contents to be retrieved, and others. The order and/or the number of times to make a user fill slots with conditions can be changed dynamically and shortened, thereby dialog control being efficient.

## Claims

1. A dialog control method comprising the steps of:
changing an inquiry to a user according to significance of the inquiry; and
outputting the changed inquiry toward the user.

2. The dialog control method of claim 1, further comprising the step of receiving either one of a content transmitted from a user and a response to the inquire toward the user, wherein
the changed inquiry is outputted in the outputting step in reply to the either one of the content and the response.

3. The dialog control method of claim 1, wherein the changing step changes the inquiry in an order of a plurality of questions belonging to the inquiry.

4. The dialog control method of claim 1, wherein the changing step changes the inquiry in a content of the inquiry.

5. The dialog control method of claim 4, wherein the changing step changes the inquiry by mutually combining at least two of a plurality of questions.

6. The dialog control method of claim 1, wherein the significance of the inquiry is decided depending on any one selected from history of a dialog communicated between the user and a system, user's personal information, and information inputted by the user.

7. The dialog control method of claim 2, wherein at least one of the content and the response received in the receiving step is inputted by the user through voice recognition, an operation with a touch panel, and an operation with a keyboard.

8. An information retrieving method for retrieving a database to obtain user's desired information, the method comprising the steps of:
changing an inquiry to a user according to significance of the inquiry;
outputting the changed inquiry toward the user;
receiving an answer from the user, the answer being inputted responsively to the outputted changed inquiry; and
retrieving the database on the basis of the received answer.

9. The information retrieving method of claim 8, wherein the significance of the inquiry is specified using at least one of type of the database and the number of data.

10. A dialog control system comprising:
changing means for changing an inquiry to a user according to significance of the inquiry; and
outputting means for outputting the changed inquiry toward the user.

11. The dialog control system of claim 10, further comprising receiving means for receiving either one of a content transmitted from a user and a response to the inquire toward the user, wherein
the changed inquiry is outputted by the outputting means in reply to the either one of the content and the response.

12. An information retrieval system for retrieving a database to obtain user's desired information, the system comprising:
changing means for changing an inquiry to a user according to significance of the inquiry,
outputting means for outputting the changed inquiry toward the user;
receiving means for receiving an answer from the user, the answer being inputted responsively to the outputted changed inquiry; and
retrieving means for the database on the basis of the received answer.

13. A car navigation system for retrieving a database to obtain user's desired destination, the system comprising:
receiving means for receiving either one of a content transmitted from a user and a response to an inquire toward the user;
dialog controlling means for changing the inquiry to the user according to significance of the inquiry;
database retrieving means for retrieving the database on the basis of the response from the user; and
outputting means for outputting at least one of the content and a retrieved result on the basis of the response.

14. The car navigation system of claim 13, wherein the dialog controlling means changes the inquiry in an order of a plurality of questions belonging to the inquiry.

15. The car navigation system of claim 13, wherein the dialog controlling means changes the inquiry in a content of the inquiry.

16. The car navigation system of claim 15, wherein the dialog controlling means changes the inquiry by mutually combining at least two of a plurality of questions.

17. A computer-readable program for controlling a dialog communicated between a user and a system, in which an order of inquiries from the system to the user is controllable depending on a score given to each slot formed in a task frame to be accomplished by the user, the program including the functions of:
changing each of the inquiries according to significance of the inquiries; and
outputting the changed inquiry toward the user.
